# EUROPEAN PATENT APPLICATION

(11) **EP 4 596 952 A1**
(43) Date of publication of application: **06.08.2025**
(21) Application number: 23872629.3
(22) Date of filing: 29.09.2023
(51) Int. Cl.: F17C 13/00, B65D 90/52, B64G 1/40

(54) **LIQUID STORAGE CONTAINER**

(30) Priority: 29.09.2022 JP 2022156694
(71) Applicant: Mjolnir Spaceworks Inc., Sapporo-shi, Hokkaido 001-0010 (JP)
(72) Inventor: ITOH, Mitsunori, Sapporo-shi, Hokkaido 001-0010 (JP); VISCOR, Tor, Sapporo-shi, Hokkaido 001-0010 (JP); TAKANASHI, Tomohiro, Sapporo-shi, Hokkaido 001-0010 (JP); SAKAGUCHI, Yoshiki, Kashiwara-shi, Osaka 582-0027 (JP)
(74) Representative: Hoffmann Eitle
(86) International application number: PCT/JP2023/035750
(87) International publication number: WO 2024/071410

(57) **Abstract**

Provided is a liquid storage vessel that is internally arranged with a device and can achieve high durability.

The liquid storage vessel includes a seamless tubular vessel main body provided internally with a storage compartment that can store liquid therein, the vessel main body having opening portions on opposite end portions thereof to communicate the storage compartment and an outside together, and a device that is partly arranged in the storage compartment of the vessel main body to act on the liquid in the storage compartment such that oscillations occurring on a liquid surface are attenuated and/or to control a position of the liquid surface. The device has a pair of fixed portions fixed in contact with the opening portions of the vessel main body, and a device assembly supported by the pair of fixed portions and not fixed directly on the vessel main body.

## Description

### Technical Field

The present invention relates to a liquid storage vessel with a device arranged inside thereof.

### Background Art

A propulsion apparatus for a liquid rocket includes a propellant tank that stores a liquid propellant, a gas tank that supplies pressurizing gas to the propellant tank, and a combustion chamber in which the propellant pressurized with the gas supplied from the gas tank and injected from the propellant tank is allowed to burn. For this propulsion apparatus, two kinds of propellant tanks, one for fuel, the other for an oxidizer, are typically used, but no substantial structural difference exists between these two kinds of propellant tanks.

Now, if the surface of liquid stored inside a propellant tank undergoes violent sloshing (oscillations) due to an acceleration or the like of a rocket, coupled vibrations are induced on a plurality of components, which constitute the rocket, by this sloshing of the liquid surface, leading to an increase in the possibility of deleterious effects on attitude control of the flying rocket. A device that includes annular members called baffles or the like is therefore arranged inside the propellant tank such that oscillations of a liquid surface are promptly attenuated. It is to be noted that a device of this type is fixed by welding on a main body of the propellant tank (see, for example, PTL 1).

### Citation List

### Patent Literature

PTL 1: Japanese Patent Laid-open No. 2008-303956

### Summary of Invention

### Technical Problem

When the device is fixed by welding on the main body of the propellant tank, however, stresses concentrate on a weld portion between the main body and the device if the main body expands or shrinks under influence of heat and/or pressure, leading to a high possibility of breakage at the weld portion. In addition, propellant tanks have involved a problem that sufficiently high durability is not necessarily available, because their main bodies are each constructed by uniting a plurality of components together through welding in order to arrange a device inside the main body.

The present invention therefore has as an object thereof the provision of a liquid storage vessel having an internally arranged device and high durability.

### Solution to Problem

According to an aspect of the present invention, there is provided a liquid storage vessel including a seamless tubular vessel main body provided internally with a storage compartment that can store liquid therein, the vessel main body having opening portions on opposite end portions thereof to communicate the storage compartment and an outside together, and a device that is partly arranged in the storage compartment of the vessel main body to act on the liquid in the storage compartment such that oscillations occurring on a liquid surface are attenuated and/or to control a position of the liquid surface. The device has a pair of fixed portions fixed in contact with the opening portions of the vessel main body, and a device assembly supported by the pair of fixed portions and not fixed directly on the vessel main body.

In the above-mentioned aspect of the present invention, the device assembly may preferably be directly connected to one of the fixed portions, and may preferably be coupled to the other fixed portion via a slidable slide portion. Further, the device assembly may preferably have a first rib directly connected to the one fixed portion, a second rib coupled to the other fixed portion via the slide portion in a slidable manner, a stringer connecting the first rib and the second rib together, and a baffle plate fixed on the stringer.

Further, desirably, each fixed portion may have a circular cylindrical shaft that is in contact at a portion of an outer peripheral surface thereof with a relevant one of the opening portions of the vessel main body, the outer peripheral surface of the shaft may be provided at the portion thereof with a fitting portion having a projecting portion and/or a recessed portion, and each opening portion may be provided at a portion thereof, the portion being in contact with the outer peripheral surface of the relevant shaft, with a fitted portion of a shape corresponding to that of the fitting portion. In addition, each shaft may preferably be provided with a hole that communicates together a space on an inner side of the shaft and a space on an outer side of the shaft.

### Advantageous Effects of Invention

As the tubular vessel main body is seamlessly constructed in the liquid storage vessel according to the aspect of the present invention, the durability of the vessel main body is high compared with, for example, the case where a vessel main body is constructed by uniting a plurality of components together through welding.

Moreover, in the liquid storage vessel according to the aspect of the present invention, the pair of fixed portions that constitute the device are fixed at the opening portions located on the opposite end portions of the vessel main body, and the device assembly that constitutes the device is not directly fixed on the vessel main body. Unlike a case where a device assembly is directly fixed on the vessel main body by welding, or a like case, stresses therefore do not concentrate between the device assembly and the vessel main body even if the vessel main body expands or shrinks under the influence of heat and/or pressure.

According to the aspect of the present invention, there is hence provided a liquid storage vessel having an internally arranged device and high durability.

### Brief Description of Drawings

[FIG. 1] FIG. 1 is a cross-sectional view schematically depicting a liquid storage vessel.
[FIG. 2] FIG. 2 is a perspective view schematically depicting a device.
[FIG. 3] FIG. 3 is a cross-sectional view schematically depicting a structure of a first fixed portion and its surroundings.
[FIG. 4] FIG. 4 is a cross-sectional view schematically depicting a structure of a second fixed portion and its surroundings.
[FIG. 5] FIG. 5(A), FIG. 5(B), FIG. 5(C), FIG. 5(D), and FIG. 5(E) are cross-sectional views schematically depicting a manufacturing method of the liquid storage vessel.

### Description of Embodiment

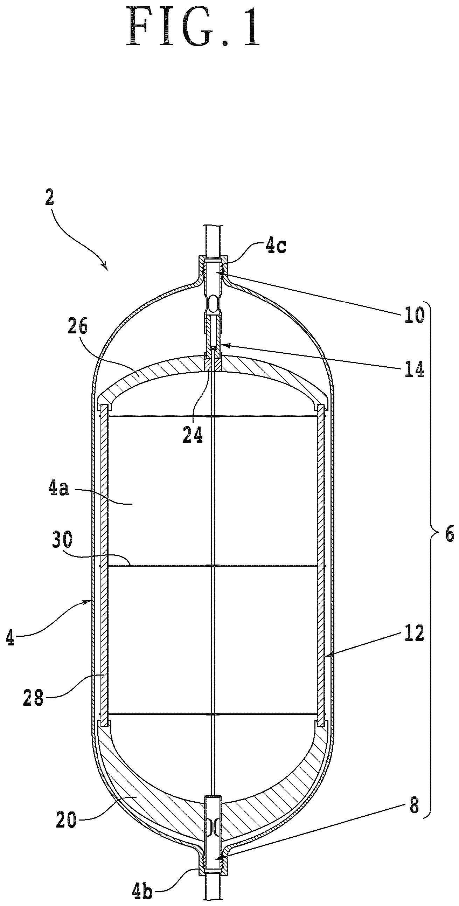

With reference to the accompanying drawings, a description will hereinafter be made of an embodiment of the present invention. FIG. 1 is a cross-sectional view schematically depicting a liquid storage vessel 2 according to this embodiment. As depicted in FIG. 1, the liquid storage vessel 2 includes a seamless tubular vessel main body 4. The vessel main body 4 is a single seamless member (component) formed in a circular cylindrical shape with, for example, metal such as an aluminum alloy (typically, aluminum alloy 2000 series, 5000 series, 6000 series, or 7000 series specified in JIS), and internally has a storage compartment 4a that can store liquid inside.

Two end portions (two end portions along a height direction of a circular cylinder) of the vessel main body 4 are each formed in a dome shape that closes the storage compartment 4a. Further, at locations corresponding to apexes of the respective end portions, an opening portion 4b and an opening portion 4c are disposed communicating together an outside and an inside (storage compartment 4a) of the vessel main body 4. In this embodiment, the opening portion 4b and the opening portion 4c are both formed in an outwardly protruding, circular cylindrical shape with a small diameter.

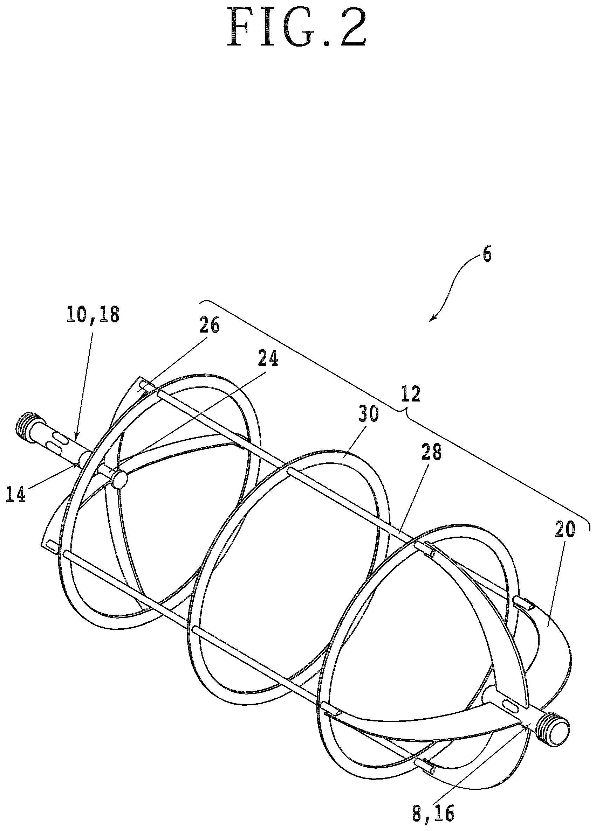

The liquid storage vessel 2 of this embodiment also includes a device 6 partly arranged in the storage compartment 4a of the vessel main body 4. FIG. 2 is a perspective view schematically depicting the device 6. As depicted in FIG. 1 and FIG. 2, the device 6 has a first fixed portion 8 fixed in contact with the one opening portion 4b of the vessel main body 4, and a second fixed portion 10 fixed in contact with the other opening portion 4c of the vessel main body 4.

Supported on the first fixed portion 8 and second fixed portion 10 is a device assembly 12 having functions to act on the liquid in the storage compartment 4a in such a manner as to attenuate oscillations (waves) occurring on the liquid surface and control the position of the liquid surface. Described in more detail, the device assembly 12 is directly connected to the first fixed portion 8, and is coupled to the second fixed portion 10 via a circular columnar slide plug (slide portion) 14 that can slide relative to the second fixed portion 10. The device assembly 12 is supported by the first fixed portion 8 and the second fixed portion 10 but is not directly fixed on the vessel main body 4. It is to be noted that the device assembly 12 is basically not in contact with the vessel main body 4 and that the vessel main body 4 and the device assembly 12 may be in contact with each other.

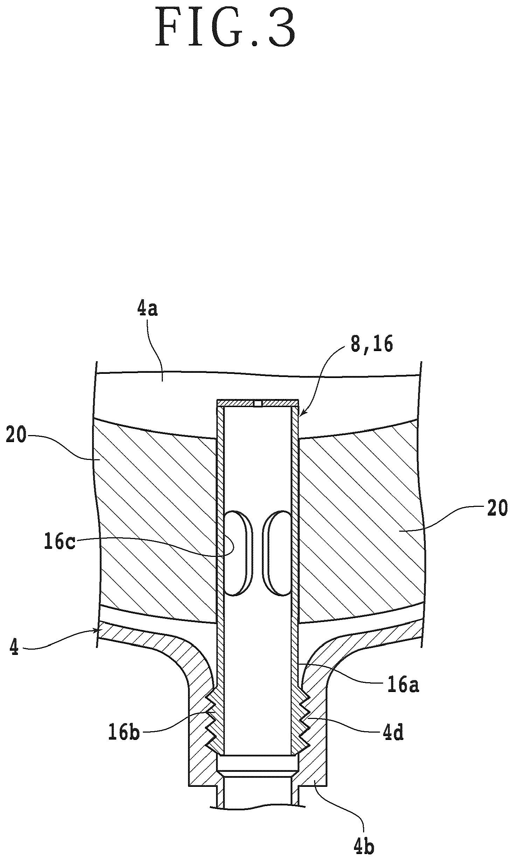

FIG. 3 is a cross-sectional view schematically depicting a structure of the first fixed portion 8 and its surroundings. As depicted in FIG. 3, the first fixed portion 8 has a tubular (for example, circular cylindrical or rectangular cylindrical) shaft 16 inserted and fixed in the opening portion 4b such that one end thereof is located in the storage compartment 4a. The shaft 16 is formed with, for example, metal such as an aluminum alloy, and a portion of an outer peripheral surface 16a on a side of the other end of the shaft 16 is in crimp contact with the opening portion 4b of the vessel main body 4.

On the portion of the outer peripheral surface 16a of the shaft 16, the portion being in contact with the opening portion 4b, a fitting portion 16b having a projecting portion and a recessed portion is disposed. On a portion of the opening portion 4b, with which the outer peripheral surface 16a (fitting portion 16b) of the shaft 16 is in contact, a fitted portion 4d of a shape corresponding to that of the fitting portion 16b is disposed. Through fitting engagement of the fitting portion 16b with the fitted portion 4d, the first fixed portion 8 is firmly fixed on the vessel main body 4.

As described above, the shaft 16 is firmly crimped and fixed on the opening portion 4b through the fitting of the fitting portion 16b with the fitted portion 4d, and is not fixed by welding. It is to be noted that, in this embodiment, the fitting portion 16b having the projecting portion and the recessed portion is depicted, but the fitting portion 16b need only have a projecting portion or a recessed portion (in other words, either one of them).

Further, the number, shape, arrangement, and the like of the projecting portion and the recessed portion, which form the fitting portion 16b, are not limited to the specific modes of this embodiment, and can be set freely in a range that the functions of the fitting portion 16b are not lost. For example, the fitting portion 16b may be formed by a screw thread or the like disposed on the outer peripheral surface 16a of the shaft 16. In this case, the fitted portion 4d may also be formed by a screw thread or the like corresponding to the screw thread or the like of the fitting portion 16b.

Further, the tubular shaft 16 is provided with a plurality of holes 16c that communicate a space on an inner side of the shaft 16 with a space on an outer side of the shaft 16. These holes 16c are arranged, for example, at locations where they do not overlap the fitting portion 16b. Alternatively, the holes 16c may be arranged at locations where they overlap the fitting portion 16b. Moreover, in this embodiment, the plurality of holes 16c are disposed in the shaft 16, but a single hole 16c may be disposed in the shaft 16. In addition, a screw thread may be disposed on an inner peripheral surface of the shaft 16.

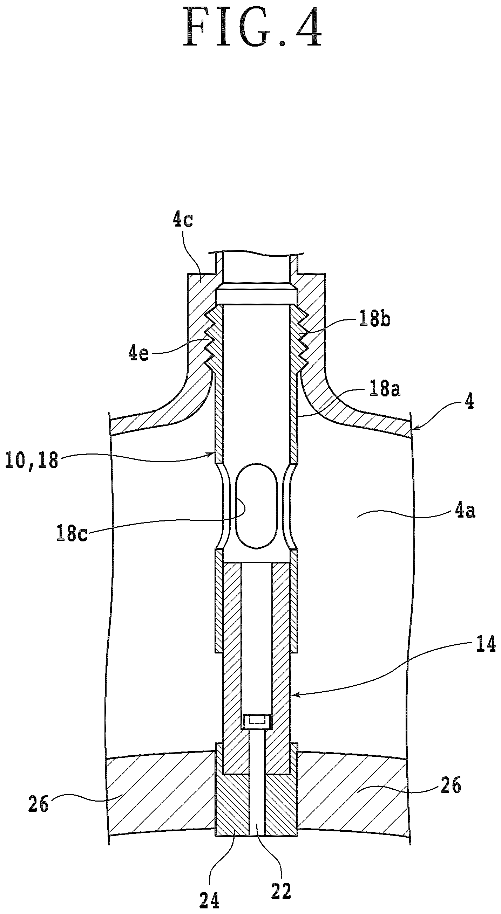

FIG. 4 is a cross-sectional view schematically depicting a structure of the second fixed portion 10 and its surroundings. As depicted in FIG. 4, the second fixed portion 10 has a tubular (for example, circular cylindrical or rectangular cylindrical) shaft 18 inserted and fixed in the opening portion 4c such that one end thereof is located in the storage compartment 4a. The structure, material, and the like of the shaft 18 are similar to those of the shaft 16 that the first fixed portion 8 has. For example, the shaft 18 is formed with metal such as an aluminum alloy, and a portion of an outer peripheral surface 18a on a side of the other end of the shaft 18 is in crimp contact with the opening portion 4c of the vessel main body 4.

On the portion of the outer peripheral surface 18a of the shaft 18, the portion being in contact with the opening portion 4c, a fitting portion 18b having a projecting portion and a recessed portion is disposed. Further, on a portion of the opening portion 4c, with which the outer peripheral surface 18a (fitting portion 18b) of the shaft 18 is in contact, a fitted portion 4e of a shape corresponding to that of the fitting portion 18b is disposed. Through fitting of the fitting portion 18b with the fitted portion 4e, the second fixed portion 10 is firmly fixed on the vessel main body 4.

As described above, the shaft 18 is firmly crimped and fixed on the opening portion 4c through the fitting of the fitting portion 18b with the fitted portion 4e, and is not fixed by welding. It is to be noted that, in this embodiment, the fitting portion 18b having the projecting portion and the recessed portion is depicted, but the fitting portion 18b need only have a recessed portion or a projecting portion (in other words, either one of them).

Further, the number, shape, arrangement, and the like of the projecting portion and the recessed portion, which form the fitting portion 18b, are not limited to the specific modes of this embodiment, and can be set freely in a range that the functions of the fitting portion 18b are not lost. For example, the fitting portion 18b may be formed by a screw thread or the like disposed on the outer peripheral surface 18a of the shaft 18. In this case, the fitted portion 4e may also be formed by a screw thread or the like corresponding to the screw thread or the like of the fitting portion 18b, or the like.

Further, the tubular shaft 18 is provided with a plurality of holes 18c that communicate a space on an inner side of the shaft 18 with a space on an outer side of the shaft 18. These holes 18c are arranged, for example, at locations where they do not overlap the fitting portion 18b. Alternatively, the holes 18c may be arranged at locations where they overlap the fitting portion 18b. Moreover, in this embodiment, the plurality of holes 18c are disposed in the shaft 18, but a single hole 18c may be disposed in the shaft 18. In addition, a screw thread may be disposed on an inner peripheral surface of the shaft 18.

Into the space on the inner side of the shaft 18, the circular columnar slide plug 14 has been inserted from the side of the one end of the shaft 18, the one end being located in the storage compartment 4a. The slide plug 14 has a width (diameter) slightly smaller than a width (diameter) of the space on the inner side of the shaft 18, and therefore, the slide plug 14 can smoothly slide along a length direction of the shaft 18 (a height direction of a circular cylinder).

It is to be noted that the slide plug 14 is desirably formed with resin such as fluorinated resin so as to enable prevention of ignition of the stored liquid, which would otherwise occur due to generation of sparks or a temperature rise by contact with the shaft 18. However, the material that forms the slide plug 14 is not limited to the resin. The slide plug 14 need only be formed with a desired material that permits appropriate use in relation to the material of the shaft 18, the stored liquid, and the like.

As depicted in FIG. 1, FIG. 2, and FIG. 3, the device assembly 12 has four first ribs 20 fixed at one end portions thereof to the shaft 16 of the first fixed portion 8. Each first rib 20 is formed with, for example, metal such as an aluminum alloy or stainless steel in an arcuate plate shape along the end portion of the dome shape of the vessel main body 4.

By surface tension acting between each first rib 20 and the liquid, the position of the surface of the liquid stored in the storage compartment 4a is controlled. It is to be noted that the four first ribs 20 are fixed on the shaft 16 by a method such as welding such that the angular intervals between adjacent two of the first ribs 20 become substantially equal one another.

Further, as depicted in FIG. 1, FIG. 2, and FIG. 4, the device assembly 12 has a rib fixture 24 attached to the slide plug 14 by a screw 22 or the like. The rib fixture 24 is formed in a circular columnar shape with, for example, metal such as an aluminum alloy or stainless steel. On this rib fixture 24, four second ribs 26 are fixed at one end portions thereof.

Each second rib 26 is formed with, for example, metal such as an aluminum alloy or stainless steel in an arcuate plate shape of a large radius of curvature (an arcuate shape with a gentle curvature) compared with the first ribs 20. The four second ribs 26 are fixed on the rib fixture 24 by a method such as welding such that the angular intervals between adjacent two of the second ribs 26 become substantially equal one another.

The device assembly 12 also has four stringers 28 coupling the other end portions of the respective first ribs 20 and the other end portions of the relevant second ribs 26 together. Each stringer 28 is formed in a circular columnar or rectangular columnar shape (a strip shape) with, for example, metal such as an aluminum alloy or stainless steel. One end portion of each stringer 28 is fixed on the other end portion of the relevant first rib 20 by a method such as welding.

The other end portion of each stringer 28 is fixed on the other end portion of the relevant second rib 26 by a method such as welding. As a consequence, the four stringers 28 are arranged between the four first ribs 20 and the four second ribs 26 such that length directions (height directions of circular columns or rectangular columns) of the respective stringers 28 extend substantially in parallel to one another.

It is to be noted that, although the four first ribs 20 and the four second ribs 26 are coupled together by the four stringers 28 in the device assembly 12 in this embodiment, the shapes, numbers, arrangements, and the like of the first ribs 20, the second ribs 26, the stringers 28, and the like can be changed according to specifications and the like of the liquid storage vessel 2. For example, lightening may be applied to the first ribs 20 and the second ribs 26.

Further, the first ribs 20, the second ribs 26, the stringers 28, and the like may be integrally formed. Moreover, the device assembly 12 is not necessarily required to include the first ribs 20, the second ribs 26, and the stringers 28. For example, the device assembly 12 may have a columnar (tubular) portion extending along a central axis of the vessel main body 4.

The device assembly 12 has three baffle plates 30 arranged at desired intervals along the length direction of the four stringers 28. Each baffle plate 30 is formed in an annular plate shape with, for example, metal such as an aluminum alloy or stainless steel, and is fixed on the stringers 28 by a method such as welding. Oscillations that have occurred on the surface of the liquid stored in the storage compartment 4a are promptly attenuated by their hitting of the baffle plates 30.

It is to be noted that, although the three baffle plates 30 formed in the annular plate shape are fixed on the four stringers 28 in the device assembly 12 in this embodiment, the shape, number, arrangement, and the like of the baffle plates 30 can be changed according to the specifications and the like of the liquid storage vessel 2. For example, lightening may be applied to the baffle plates 30. Further, the baffle plates 30 are not absolutely required to be fixed on the stringers 28. If the device assembly 12 has the columnar (tubular) portion extending along the central axis of the vessel main body 4, for example, the baffle plates 30 may be fixed on the columnar (tubular) portion.

The liquid storage vessel 2 of this embodiment constructed as described above has high durability, and can withstand use under a severe environment including the outer space. Representatively, the liquid storage vessel 2 is used as a propellant tank for a liquid rocket. In this case, gas that has been supplied, for example, from an outside of the vessel main body 4 (a gas tank or the like that supplies pressurizing gas) flows into the storage compartment 4a through the holes 18c of the shaft 18, so that the pressure inside the storage compartment 4a is raised.

When the pressure inside the storage compartment 4a is raised, the liquid, such as fuel and an oxidizer, stored in the storage compartment 4a is pushed out and is discharged from the other end of the shaft 16 to the outside of the vessel main body 4 through the holes 16c of the shaft 16. In the case of storage of the liquid, such as the fuel and oxidizer, in the storage compartment 4a, the liquid supplied from the outside of the vessel main body 4 flows into the storage compartment 4a through the holes 16c of the shaft 16 or the holes 18c of the shaft 18. However, such functions of the shaft 16 and the shaft 18 may be interchanged or altered according to the mode or the like of the use.

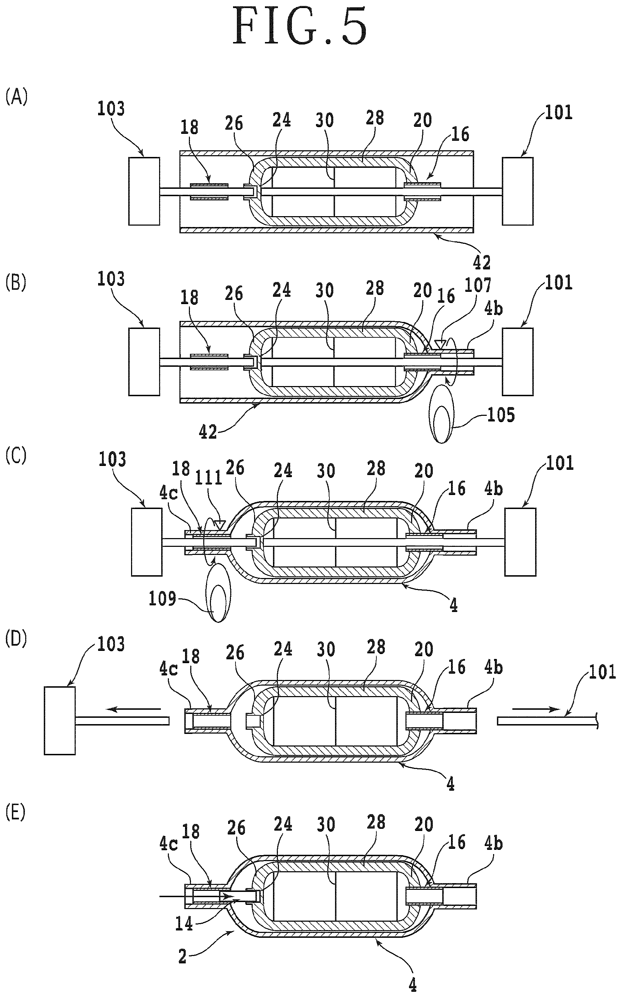

A description will next be made of a manufacturing method of the above-mentioned liquid storage vessel 2. FIG. 5(A), FIG. 5(B), FIG. 5(C), FIG. 5(D), and FIG. 5(E) are cross-sectional views schematically depicting the manufacturing method of the liquid storage vessel 2. In the manufacturing method of the liquid storage vessel 2 according to this embodiment, as depicted in FIG. 5(A), the device assembly 12 (the first ribs 20, the rib fixture 24, the second ribs 26, the stringers 28, and the baffle plates 30), which is fixed on the shaft 16 of the first fixed portion 8, is first inserted into a space on an inner side of a tubular member 42 that is to be formed into the vessel main body 4.

It is to be noted that a first fixing jig 101 is inserted into the shaft 16. The first fixing jig 101 is then temporarily fixed on the device assembly 12 (for example, the rib fixture 24) from a side of the shaft 16. In addition, a second fixing jig 103 is inserted into the shaft 18 of the second fixed portion 10 in a state of being not coupled to the device assembly 12.

The second fixing jig 103 is then temporarily fixed on the device assembly 12 (for example, the rib fixture 24) from a side opposite to the shaft 16. It is to be noted that the shaft 18 is fixed on the second fixing jig 103, for example, by applying a pressure from the inner side of the shaft 18 with the second fixing jig 103. However, the fixing method of the shaft 18 to the second fixing jig 103 is not limited to this mode.

As depicted in FIG. 5(B), an inward pressure is subsequently applied from an outside to a portion of the tubular member 42, the portion being on the side of the shaft 16, with the tubular member 42 being heated at the portion thereof by flame 105 of a burner or the like. The pressure is applied to the circular cylindrical member 42, for example, by pressing a wedge-shaped metal member 107 against the circular cylindrical member 42 while rotating the metal member 107 coaxially with the circular cylindrical member 42.

As a consequence, the circular cylindrical member 42 is formed into a dome shape at the end portion thereof on the side of the shaft 16, and the circular cylindrical opening portion 4b is formed with a small diameter compared with the diameter of the original tubular member 42. At the same time, the fitted portion 4d that has the shape matching the shape of the fitting portion 16b of the shaft 16 is formed on the opening portion 4b.

As depicted in FIG. 5(C), an inward pressure is similarly applied from an outside to a portion of the tubular member 42, the portion being on a side of the shaft 18, with the tubular member 42 being heated at the portion thereof by flame 109 of a burner or the like. The pressure is applied to the circular cylindrical member 42, for example, by pressing a wedge-shaped metal member 111 against the circular cylindrical member 42 while rotating the metal member 111 coaxially with the circular cylindrical member 42.

As a consequence, the circular cylindrical member 42 is formed into a dome shape at the end portion thereof on the side of the shaft 18, and the circular cylindrical opening portion 4c is formed with a small diameter compared with the diameter of the original tubular member 42. At the same time, the fitted portion 4e that has the shape matching the shape of the fitting portion 18b of the shaft 18 is formed on the opening portion 4c. It is to be noted that, although the opening portion 4c is formed after the formation of the opening portion 4b in this embodiment, the opening portion 4b may be formed after the formation of the opening portion 4c.

After the vessel main body 4 has been formed through the above-mentioned steps, the first fixing jig 101 and the second fixing jig 103 are detached from the device assembly 12 as depicted in FIG. 5(D). The first fixing jig 101 and the second fixing jig 103 are then pulled out of the shaft 16 and the shaft 18.

Subsequently, as depicted in FIG. 5(E), the slide plug 14 is inserted into the shaft 18 and is fixed on the rib fixture 24 by a method such as fastening, whereby the liquid storage vessel 2 is completed. It is to be noted that the slide plug 14 is desirably inserted into the shaft 18 in the last step to avoid deformation or the like of the slide plug 14 which would otherwise occur by heat applied when the liquid storage vessel 2 is manufactured. However, the slide plug 14 may be inserted into the shaft 18 before the heating of the tubular member 42 or the like if the slide plug 14 is formed with a heat-resistant material.

As described above, the vessel main body 4 is constructed seamless in the liquid storage vessel 2 of this embodiment. The vessel main body 4 is therefore provided with enhanced durability compared with, for example, the case where the vessel main body 4 is constructed by uniting a plurality of components together through welding.

Further, in the liquid storage vessel 2 of this embodiment, the first fixed portion 8 (shaft 16) and the second fixed portion 10 (shaft 18), which constitute the device 6, are fixed on the opening portion 4b and the opening portion 4c located on the opposite end portions of the vessel main body 4, and the device assembly 12 that constitutes the device 6 is not directly fixed on the vessel main body 4. Unlike the case where the device assembly 12 is fixed on the vessel main body 4 by welding, or a like case, stresses therefore do not concentrate on the contact fixed portion between the device assembly 12 and the vessel main body 4 even if the vessel main body expands or shrinks under the influence of heat and/or pressure.

Further, in the liquid storage vessel 2 of this embodiment, the device assembly 12 that constitutes the device 6 is directly connected to the first fixed portion 8 (shaft 16) and is coupled to the second fixed portion 10 (shaft 18) via the slidable slide plug (slide portion) 14. Therefore, even if individual components expand or shrink due to a change in temperature, the slide plug 14 slides, and effects of the expansion or shrinkage are mitigated.

It is to be noted that the present invention can be practiced with modifications as desired without limitations by or to the foregoing description of the embodiment. For example, not only the baffle plates 30 but also members (components) such as the first ribs 20 and the second ribs 26, which constitute the device assembly 12, may have a function to attenuate oscillations occurred on the surface of the liquid.

In addition, not only the first ribs 20 but also members (components) such as the second ribs 26, the stringers 28, and the baffle plates 30, which constitute the device assembly 12, may have a function to control the position of the surface of the liquid by surface tension. Moreover, for example, components such as the shaft 18 and the slide plug 14, which are smaller in diameter than the inner diameter of the opening portion 4c, may be inserted into and fixed on the opening portion 4c in a desired step after the formation of the vessel main body 4 (typically, in the last step).

Besides, the structures, method, and the like according to the above-mentioned embodiment can be practiced with modifications as desired insofar as not departing from the scope of the object of the present invention.

### Reference Signs List

2: Liquid storage vessel
4: Vessel main body
4a: Storage compartment
4b: Opening portion
4c: Opening portion
4d: Fitted portion
4e: Fitted portion
6: Device
8: First fixed portion
10: Second fixed portion
12: Device assembly
14: Slide plug (slide portion)
16: Shaft
16a: Outer peripheral surface
16b: Fitting portion
16c: Hole
18: Shaft
18a: Outer peripheral surface
18b: Fitting portion
18c: Hole
20: First rib
22: Screw
24: Rib fixture
26: Second rib
28: Stringer
30: Baffle plate
42: Tubular member

## Claims

1. A liquid storage vessel comprising:
a seamless tubular vessel main body provided internally with a storage compartment that can store liquid therein, the vessel main body having opening portions on opposite end portions thereof to communicate the storage compartment and an outside together; and
a device that is partly arranged in the storage compartment of the vessel main body to act on the liquid in the storage compartment such that oscillations occurring on a liquid surface are attenuated and/or to control a position of the liquid surface,
wherein the device has
a pair of fixed portions fixed in contact with the opening portions of the vessel main body, and
a device assembly supported by the pair of fixed portions and not fixed directly on the vessel main body.

2. The liquid storage vessel according to claim 1, wherein the device assembly is directly connected to one of the fixed portions, and is coupled to the other fixed portion via a slidable slide portion.

3. The liquid storage vessel according to claim 2, wherein the device assembly has a first rib directly connected to the one fixed portion, a second rib coupled to the other fixed portion via the slidable slide portion, a stringer connecting the first rib and the second rib together, and a baffle plate fixed on the stringer.

4. The liquid storage vessel according to any one of claims 1 to 3,
wherein each fixed portion has a circular cylindrical shaft that is in contact at a portion of an outer peripheral surface thereof with a relevant one of the opening portions of the vessel main body,
the outer peripheral surface of the shaft is provided at the portion thereof with a fitting portion having a projecting portion and/or a recessed portion, and
each opening portion is provided at a portion thereof, the portion being in contact with the outer peripheral surface of the relevant shaft, with a fitted portion of a shape corresponding to that of the fitting portion.

5. The liquid storage vessel according to claim 4, wherein each shaft is provided with a hole that communicates together a space on an inner side of the shaft and a space on an outer side of the shaft.
